(19) Europäisches Patentamt / European Patent Office / Office européen des brevets

(11) **EP 4 642 056 A1**

(12) **EUROPEAN PATENT APPLICATION**

(43) Date of publication:
**29.10.2025 Bulletin 2025/44**

(21) Application number: **24172241.2**

(22) Date of filing: **24.04.2024**

(51) International Patent Classification (IPC):
*H04W 4/02* (2018.01)   *H04W 16/18* (2009.01)
*H04W 36/00* (2009.01)   *H04W 36/32* (2009.01)

(52) Cooperative Patent Classification (CPC):
H04W 4/02; H04W 16/18; H04W 36/00835;
H04W 36/322

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **British Telecommunications public limited company**
**London E1 8EE (GB)**

(72) Inventor: **The designation of the inventor has not yet been filed**

(74) Representative: **British Telecommunications public limited company**
**Intellectual Property Department**
**9th Floor**
**One Braham**
**Braham Street**
**London E1 8EE (GB)**

(54) **SELECTING CANDIDATE WIRELESS NETWORK ACCESS NODES**

(57)   A computer-implemented method comprising selecting a shortlist of candidate wireless network access nodes most likely to serve a target wireless communication device at a target location from a longlist of candidate wireless network access nodes, by iteratively: (i) moving a closest candidate wireless network access node, which is the candidate wireless network access node of the longlist closest to the target location, from the longlist to the shortlist; and (ii) deleting from the longlist any other candidate wireless network access nodes located within a shadow sector which encompasses that closest candidate wireless network access node, the shadow sector being a sector of a circle centred on the target location and encompassing all of the candidate wireless network access nodes on the longlist.

FIG. 2B

## Description

## FIELD

The present disclosure relates to determining which of a plurality of wireless network access nodes a target wireless communication device is most likely to be served by.

More specifically, an aspect relates to a computer-implemented method comprising selecting a shortlist of candidate wireless network access nodes most likely to serve a target wireless communication device at a target location from a longlist of candidate wireless network access nodes. Further aspects relate to a data processing system configured to perform such a method, a computer program comprising instructions which, when the program is executed by a computer, cause the computer to carry out such a method, a computer-readable data carrier having stored thereon such a computer program, and a data carrier signal carrying such a computer program.

## BACKGROUND

There are several scenarios in which it is useful to know which of a plurality of wireless network access nodes, such as cellular base stations or Wi-Fi™ access points, a target communication device is likely to be served by.

As one example, law enforcement agencies may for example know the location of a crime (or suspected crime) and wish to determine who was in the vicinity (and/or making a call or other communication in the vicinity) at the time, in order to identify suspects and/or witnesses and/or obtain evidence pertinent to an investigation. However, in urban environments there can be hundreds of cellular base stations theoretically within range of a location so obtaining and analysing call and/or connection records from all of them can be extremely burdensome, and may breach privacy regulations. Vehicular traffic monitoring agencies can face similar problems when investigating traffic accidents. Similar issues can apply to infrastructure operators investigating fault incidents. Insurance providers may face similar challenges when verifying claims.

As another example, it may be useful to know which of the local wireless network access nodes is likely to be impacted by a new building development (e.g. to provide one or more of housing, workplaces, public services, retail centres, entertainment venues and transport hubs) in order to perform associated capacity planning. Similar capacity planning considerations apply when arranging large-scale events such as festivals, concerts, and sporting events.

As a further example, a wireless telecommunication network provider may receive a cluster of service issue notifications for a particular location, whether via monitoring systems, engineer report, or user complaints.

Determining which wireless network access nodes are likely to serve that location can improve the efficiency of processes to diagnose and fix the issue.

In all of the above scenarios the pertinent information available may be limited to the target location and the locations of nearby wireless network access nodes. What is needed therefore, is a method of narrowing down a list of wireless network access nodes which may conceivably serve a target location, which can work even when minimal information is available.

## SUMMARY

According to a first aspect, there is provided a computer-implemented method comprising selecting a shortlist of candidate wireless network access nodes most likely to serve a target wireless communication device at a target location from a longlist of candidate wireless network access nodes, by iteratively: (i) moving a closest candidate wireless network access node, which is the candidate wireless network access node of the longlist closest to the target location, from the longlist to the shortlist; and (ii) deleting from the longlist any other candidate wireless network access nodes located within a shadow sector which encompasses that closest candidate wireless network access node, the shadow sector being a sector of a circle centred on the target location and encompassing all of the candidate wireless network access nodes on the longlist.

The computer-implemented method can further comprise obtaining relative locations of each of the longlist of candidate wireless network access nodes with respect to the target location. Obtaining the relative locations can comprise receiving or retrieving said relative locations directly. Alternatively, obtaining the relative locations can comprise receiving or retrieving location data for each of the longlist of candidate wireless network access nodes and the target location, and calculating the relative locations therefrom.

For each iteration, the shadow sector can substantially extend from the target location in a direction of the respective closest candidate wireless network access node. The method can further comprise determining an angular size of the shadow sector for each iteration such that said angular size increases with the respective closest candidate wireless network access node's distance from the target location. The angular size can be determined in dependence on a predetermined maximum distance between the target wireless communication device and its serving wireless network access node, such that the angular size is 360° when the closest candidate wireless network access node's distance from the target location is equal to that predetermined maximum distance. The angular size ($A$) in degrees can be determined as

$$A = 360d/D$$

where d is the closest candidate wireless network access node's distance from the target location and D is the predetermined maximum distance.

The computer-implemented method can further comprise generating the longlist of candidate wireless network access nodes by obtaining a list of wireless network access nodes within a geofence in which the target location is located. The geofence can be defined using a circle centred on the target location. The radius of that circle can be a predetermined maximum distance between the target wireless communication device and its serving wireless network access node.

The geofence can alternatively be defined using a square centred on the target location. The sides of that square can be double a predetermined maximum distance between the target wireless communication device and its serving wireless network access node. Alternatively, or in addition to using such a circle or square, the geofence can be defined using an administrative boundary such as a border and/or a physical boundary such as a manmade structure (e.g. a wall, a fence, a road, or a canal), or a geographical feature (e.g. a ridge line, a contour line, a coastline, or a river). The longlist can be generated by applying one or more filters to the list of wireless network access nodes within the geofence, said one or more filters being selected from filters on: a communication technology the wireless network access node operates with; an operator of the wireless network access node; a maximum angle between a bearing from the wireless network access node to the target location, and a direction in which a nearest antenna lobe of the wireless network access node substantially extends; and a time window the wireless network access node was/will be operational during.

The computer-implemented method can further comprise obtaining a set of incident data for each of one or more incidents, each set of incident data comprising a respective incident location and a respective incident time window. The selection of the shortlist of candidate wireless network access nodes can be performed in respect of one or more target locations respectively corresponding to the one or more incident locations to produce a corresponding one or more shortlists. The method can further comprise, for each incident, obtaining one or more records relating to serving of client communication devices by each candidate wireless network access node of the corresponding shortlist during that incident's time window. When there are a plurality of sets of incident data, the method can further comprise cross-referencing records obtained for the plurality of incident time windows with one another to identify any wireless communication devices present at more than one of the plurality of incidents. The incidents can be crimes, and/or suspected crimes, and/or accidents, and/or faults. The incident data can originate from a data processing system of a law enforcement agency, and/or a vehicular traffic monitoring agency, and/or an insurance provider, and/or an infrastructure operator. The records can comprise client communication device identifiers. The records can comprise call and/or connection logs. Data in the records can originate from data processing systems associated with the wireless network access nodes of each of the plurality of shortlists.

The computer-implemented method can further comprise, following selection of the shortlist: obtaining headroom data indicating capacity of each of the candidate wireless access nodes on the shortlist to handle a predicted increase in a number of client wireless communication devices at the target location; identifying, in dependence on said headroom data, one or more of the candidate wireless access nodes on the shortlist that require increased headroom to accommodate that predicted increase; and initiating reconfiguration of a network comprising the candidate wireless network access nodes on the shortlist to increase headroom of those one or more identified candidate wireless access nodes. The reconfiguration can comprise upgrading the identified candidate wireless network access nodes, for example by means of a software, and/or firmware, and/or hardware upgrade. The reconfiguration can alternatively or additionally comprise adding one or more new wireless access nodes to the network in the vicinity of the identified candidate wireless network access nodes, for example within a predetermined radius of each of the identified candidate wireless network access nodes. Initiating the reconfiguration can comprise controlling an automated system and/or recommending the reconfiguration to a human via a user interface device, whether in response to a request received via a user interface device or as an unprompted alert. The computer-implemented method can further comprise predicting the increase in the number of wireless communication devices at the target location and performing the method in response thereto. The predicting can be based on one or more of: building (e.g. housing, and/or workplaces, and/or public services, and/or retail centres, and/or entertainment venues, and/or transport hubs) development plans, and event (e.g. festival, and/or concert, and/or sporting event) plans.

The computer-implemented method can further comprise, following selection of the shortlist: obtaining one or more records relating to operation of each candidate wireless network access node on the shortlist; and performing a service issue diagnosis process in dependence thereon. The computer-implemented method can further comprise: obtaining one or more service issue notifications in respect of the target location and performing the above-described method in response thereto; and optionally determining the target location based on location data associated with the service issue notifications. The target location can be determined as the arithmetic mean of a location associated with each of the service issue notifications. The mean can be a weighted mean, with weightings of each location being determined according to data comprised in the service issue notification from which it was obtained.

Iteration of steps (i) and (ii) can be terminated on satisfaction of one or more termination criteria selected from: the longlist being empty; the shortlist consisting of a predetermined maximum number of candidate wireless network access nodes; a predetermined maximum number of iterations having been completed; and a predetermined maximum iteration duration having expired.

According to a second aspect, there is provided a data processing system configured to perform the method of the first aspect.

According to a third aspect, there is provided a computer program comprising instructions which, when the program is executed by a computer, cause the computer to carry out the method of the first aspect.

According to a fourth aspect, there is provided a computer-readable data carrier having stored thereon the computer program of the third aspect.

According to a fifth aspect, there is provided a data carrier signal carrying the computer program of the third aspect.

**BRIEF DESCRIPTION OF THE FIGURES**

Aspects of the present disclosure will now be described by way of example with reference to the accompanying figures. In the figures:

Figure 1 is a flowchart of an example computer-implemented method;
Figure 2A illustrates an example longlist and shortlist after a first iteration of an example method;
Figure 2B illustrates an example longlist and shortlist after a second iteration of that example method;
Figure 2C illustrates an example longlist and shortlist after a third iteration of that example method;
Figure 2D illustrates a finalised shortlist output by that example method;
Figure 3 is a flowchart of an example computer-implemented method which can be used to obtain data relevant to investigation of one or more incidents;
Figure 4 is a flowchart of an example computer-implemented method which can be used to initiate network reconfiguration for capacity planning purposes;
Figure 5 is a flowchart of an example computer-implemented method which can be used to diagnose communication service issues; and
Figure 6 schematically illustrates an example data processing system.

**DETAILED DESCRIPTION**

The approach to determining which of a plurality of wireless network access nodes a target wireless communication device is likely to be served by presented herein is to find the closest wireless network access node in each direction around the target location. This is achieved by an iterative algorithm which finds the closest wireless network access node of the plurality, then excludes all wireless network access nodes behind it (i.e. in substantially the same direction as that wireless network access node), then finds the next closest wireless network access node and so on until none remain (or until some other termination criterion is met). This outputs a ranked shortlist of wireless network access nodes most likely to serve the target location.

This algorithm can be used for narrowing down the options when trying to find out which wireless network access node was/might be used for connection at a given target location, for example in any of the scenarios described in the background section above, e.g. to help investigators pull phone records relevant to an investigation, to help diagnose connection issues, or to predict load on wireless network access nodes close to a planned event or building development.

The approach described herein can advantageously be used in situations where minimal data is available. It can also avoid the need to compromise on selection of a limiting input parameter, as is the case with simpler approaches which for example select all candidate wireless network access nodes within a predetermined radius of the target location, or select the closest n candidate wireless network access nodes to the target location. Such a compromise may not suit all situations, for example due to the density of cellular network access nodes differing significantly between rural and urban environments. It also addresses a problem such simple approaches fail to solve, which arises when line of sight in a particular direction is blocked. For example, all of the closest n candidate wireless network access nodes, and/or all of the candidate wireless network access nodes within the predetermined radius, may be located on substantially the same bearing from the target location. However, if there is a tall building or hill blocking line of sight in that direction then the target communication device may not be able to connect to any of them. The methods described herein solve that problem without requiring any data indicating the presence of the building or geographical feature, or absent/poor quality of service from the candidate wireless network access nodes behind it.

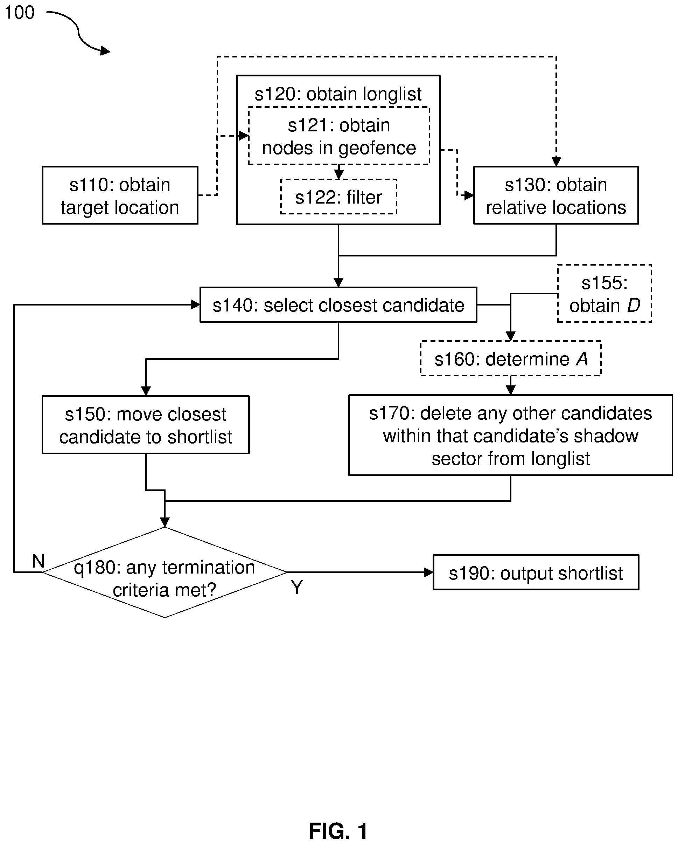

Figure 1 is a flowchart of an example computer-implemented method 100 of selecting a shortlist of candidate wireless network access nodes most likely to serve a target wireless communication device at a target location from a longlist of candidate wireless network access nodes.

The target location, the longlist, and the locations of each of the candidate wireless network access nodes on the longlist relative to the target location are respectively obtained at steps s110, s120, and s130. All of that data can be obtained by receiving it (or precursor data from which the data processing system performing the method 100 can derive it) from another data processing system, whether unprompted or in response to a request, and/or by receiving it from a user input device.

Step s120 can optionally comprise obtaining a list of identifiers of wireless network access nodes within a geofence in which the target location is located at step s121. Again, that list can be obtained by receiving it (or precursor data from which the data processing system performing the method 100 can derive it) from another data processing system, whether unprompted or in response to a request, and/or by receiving it from a user input device. For example, the target location s110 can be used to query a database of candidate wireless network access nodes, along with one or more other parameters to define the geofence. In some examples, the geofence can be defined using a circle centred on the target location. The radius of that circle can for example be a predetermined maximum distance between the target wireless communication device and its serving wireless network access node, i.e. the maximum theoretical range of the target wireless communication device (e.g. around 5-20 km, such as 15km, for a cellular communication device). In other examples, the geofence can alternatively be defined using a square centred on the target location. The sides of that square can for example be double a predetermined maximum distance between the target wireless communication device and its serving wireless network access node, i.e. the maximum theoretical range of the target wireless communication device (e.g. around 5-20 km, such as 15km, for a cellular communication device). Such a square geofence may, unlike the circular geofence described above, encompass some wireless network access nodes which are outside of the maximum theoretical range of the target location. However, it may be simpler to implement if the wireless network access node locations are defined in a cartesian or geographic coordinate system. Alternatively, or in addition to using such a circle or square, the geofence can be defined using an administrative boundary such as a border and/or a physical boundary such as a manmade structure (e.g. a wall, a fence, a road, or a canal), or a geographical feature (e.g. a ridge line, a contour line, a coastline, or a river).

The longlist can optionally be generated by applying one or more filters to the list of wireless network access nodes within the geofence at step s122. Such filters can reduce the initial length of the longlist, which in turn can reduce the time and processing resources required for the method 100 to converge. They can also improve the accuracy of the prediction made by the method 100. For example, said one or more filters can be selected from the following.

- A filter on a communication technology the wireless network access node operates with (e.g. 4G/5G, or Wi-Fi 4/5/6)
  This can be useful if the communication technology/ies the target communication device is equipped with is/are known. It can optionally be used in conjunction with a secondary geofence to take into account the different maximum theoretical ranges of different communication technologies. For example, an initial list of wireless network access nodes could comprise all cell towers within the maximum theoretical 4G range of the target location, but if a 5G filter is applied that list is reduced to only those cell towers operating a 5G service, within the maximum theoretical 5G range (which is typically lower than 4G range) of the target location.

- A filter on an operator of the wireless network access node
  This can be useful if the operator the target communication device receives telecommunication network service via (e.g. the operator it is subscribed to) is known, in circumstances where roaming between operators is forbidden or restricted.

- A filter setting a maximum angle between a bearing from the wireless network access node to the target location, and a direction in which a nearest antenna lobe of the wireless network access node substantially extends
  This can be useful if the wireless network access node can only communicate (or can only communicate with acceptable quality of service) in regions covered by one or more directional antenna lobes.

- A time window filter
  This can rule out wireless network access nodes which were not/are not intended to be operational during a target time window. For example, a wireless network access node may have suffered a fault which resulted in unscheduled down-time during the target time window, or may have been/be subject to scheduled maintenance down-time during the target time window. As another example, a wireless network access node may only be temporarily operational, e.g. to serve an event such as a festival. Another example is where a permanent wireless network access node is new, and was not yet operational during a past target time window, or is reaching the end of its life, and is scheduled to be decommissioned before a future target time window.

The target location obtained at step s110 and the longlist obtained at step s120 can optionally be used to obtain the relative locations at step s130. The relative locations can for example be expressed in polar coordinates, indicating: (i) the distances between the target location and each of the candidate wireless network access nodes on the longlist; and (ii) an angle between an origin direction (e.g. North) and a bearing from each candidate wireless network access node to the target location. Alternatively, the relative locations can for example be expressed as two dimensional vectors, e.g. with the target location set as the origin and the abscissa and ordinate axes defined in any suitable manner (e.g. as East and North respectively).

The relative locations obtained at step s130 and the longlist obtained at step s120 are used at step s140 to select the closest candidate wireless network access node to the target location. This can for example be achieved by associating the relative locations with corresponding identifiers from the longlist in a data structure such as a data frame, then sorting in ascending order of relative location, and selecting the first candidate wireless network access node identifier in the sorted data structure.

At step s150, the candidate wireless network access node closest to the target location is moved from the longlist to the shortlist. For example, its identifier can be removed from a data structure storing identifiers of the longlist candidate wireless network access nodes (such as the sorted data structure described above), and entered into a shortlist data structure such as a data frame.

At step s170 any other candidate wireless network access nodes (i.e. other than the closest candidate wireless network access node) located within a 'shadow' sector which encompasses that closest candidate wireless network access node are deleted from the longlist. The shadow sector is a sector of an imaginary circle, that circle being centred on the target location and encompassing all of the candidate wireless network access nodes on the longlist. (If a circle centred on the target location is used in defining a geofence as described above, the circle the shadow sector is defined in relation to can be the same as that geofence, or different from it. The geofence circle radius is predetermined, while the shadow sector circle's radius can be any value greater than or equal to the distance from the target location to the furthest candidate wireless network access node on the longlist.)

The circle the shadow sector is defined in relation to can be split into predefined sectors, so that determination of the shadow sector can comprise selecting the predefined sector in which the closest candidate wireless network access node is located.

Alternatively, the shadow sector can be determined in dependence on data relating to the closest candidate wireless network access node. For example, the shadow sector can substantially extend from the target location in a direction of the closest candidate wireless network access node. That is, a bearing from the target location to the closest candidate wireless network access node can (approximately) bisect the shadow sector into two (approximately) equally sized smaller sectors. The method 100 can optionally further comprise determining an angular size, 'A', of the shadow sector such that said angular size increases with the closest candidate wireless network access node's distance from the target location, as illustrated at step s160.

The angular size can for example be determined in dependence on a predetermined maximum distance between the target wireless communication device and its serving wireless network access node, 'D' (i.e. the maximum theoretical range of the target wireless communication device; e.g. around 5-20 km, such as 15km, for a cellular communication device), e.g. such that the angular size is 360° when the closest candidate wireless network access node's distance from the target location is equal to that predetermined maximum distance. Accordingly, the angular size (A) in degrees can be determined as

$$A = 360d/D$$

where $d$ is the closest candidate wireless network access node's distance from the target location and $D$ is the predetermined maximum distance. $D$ can optionally be obtained at step s155 (which, along with step s140, feeds into step s160) to enable this determination. $D$ can be obtained by receiving it (or precursor data from which the data processing system performing the method 100 can derive it) from another data processing system, whether unprompted or in response to a request, and/or by receiving it from a user input device.

Steps s150 and s170 can both be performed at any time between step s140 and query q180 (which will be described below), in series (in either order) or partially or fully in parallel. In one convenient example implementation, step s170 is performed in response to step s150 so that the closest candidate wireless network access node need not be explicitly separated out when any deletion(s) of step s170 are performed, as it has already been moved to the shortlist.

Once both of steps s150 and s170 are complete, query q180 determines whether any termination criteria are met. If not, the method 100 iterates back through steps s140 to s170. On second and subsequent iterations, step s140 selects from the longlist as it stands following the most recent iteration of steps s150 and s170, so that the 'closest candidate' selected on the second iteration of step s140 is different to the 'closest candidate(s)' selected in the previous iteration(s). That is, each iteration of step s140 selects the closest to the target location of the candidate wireless network access nodes identified in the original longlist obtained at step s120 that has not already been: (i) moved to the shortlist, or (ii) excluded (by deletion from the longlist) due to being in the 'shadow' of one of the candidate wireless network access nodes which has been moved to the shortlist.

If query q180 determines that a termination criterion is met, the shortlist is output at step s190. One or more termination criteria can be selected from:

- the longlist being empty (i.e. the iterative process converging);
- the shortlist consisting of a predetermined maximum number of candidate wireless network access nodes;
- a predetermined maximum number of iterations having been completed; and
- a predetermined maximum iteration duration having expired.

The way in which the iterations of the method 100 are performed means that the shortlist output at step s190 is automatically ranked by distance from the target location, with the closest candidate network access node to the target location (and thus the most likely candidate) first.

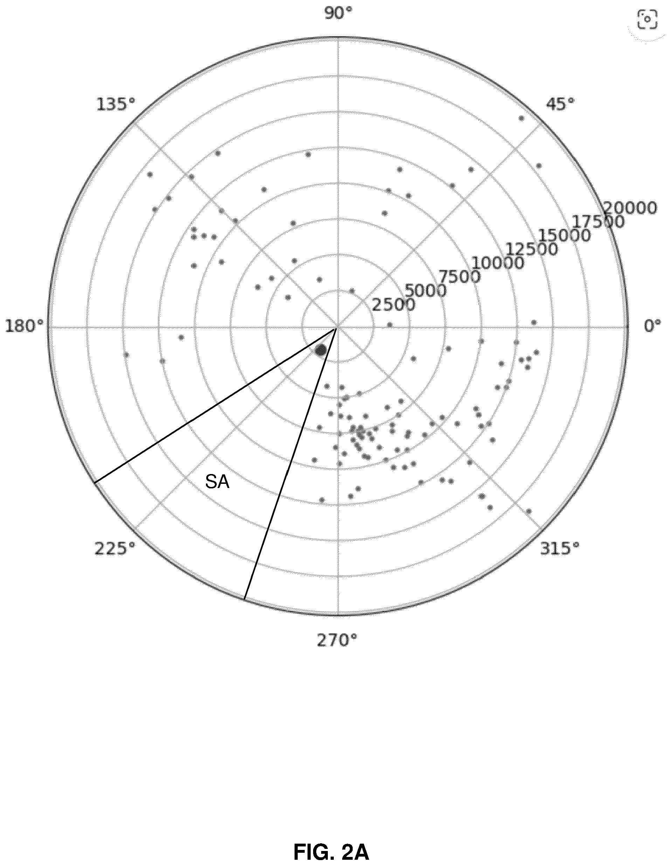

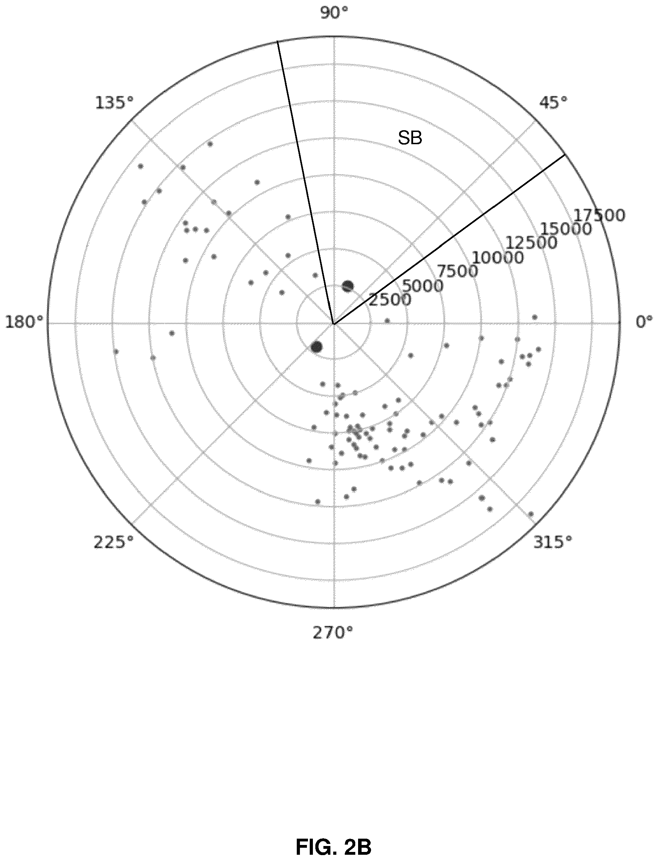

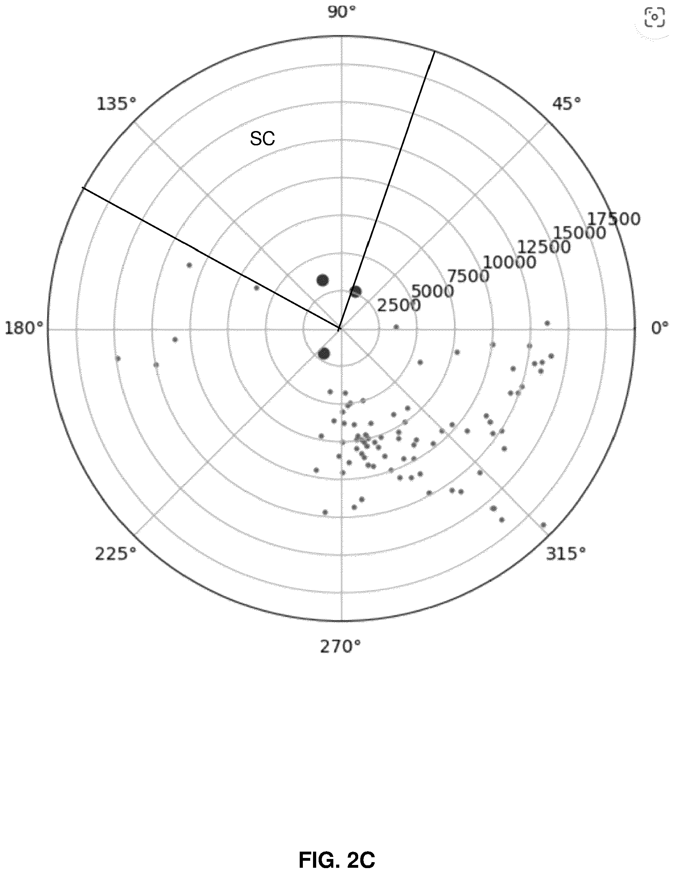

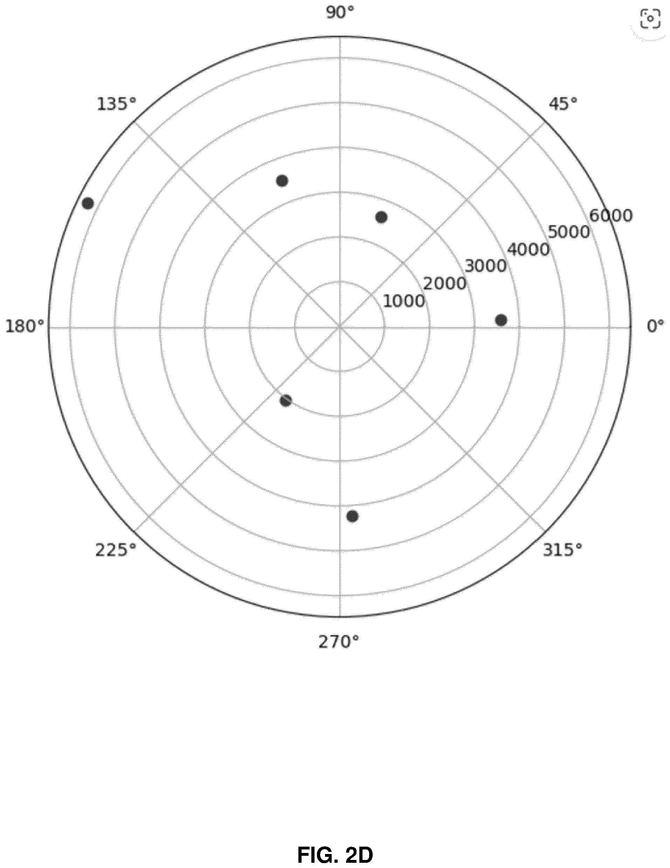

Figures 2A to 2D illustrate an example of the iterative process described above using polar plots of candidate wireless network access nodes with the target location at the pole, where the radius values indicated by concentric circles are in metres. The small dots indicate the locations of candidate wireless network access nodes in the longlist. The large dots indicate candidate wireless network access nodes in the shortlist. Figure 2A illustrates the lists after a first iteration of the method, where there is a single candidate wireless network access node in the shortlist, and the other candidate wireless network access nodes in its shadow sector (outlined at SA) have been deleted. Figure 2B illustrates the lists after a second iteration, where a second candidate wireless network access node has been added to the shortlist, and the other candidate wireless network access nodes in its shadow sector (outlined at SB) have been deleted. Figure 2C illustrates the lists after a third iteration, where a third candidate wireless network access node has been added to the shortlist, and the other candidate wireless network access nodes in its shadow sector (outlined at SC) have been deleted. It can be seen from a comparison of the respective shadow sectors SA to SC of Figures 2A to 2C that the shadow sectors grow as the radial coordinate of the shortlist nodes they result from increases. Figure 2D illustrates the finalised shortlist, where in this case that is arrived at after six iterations. (Note that the radial axis is rescaled relative to Figures 2A to 2C to focus in on the shortlist nodes.)

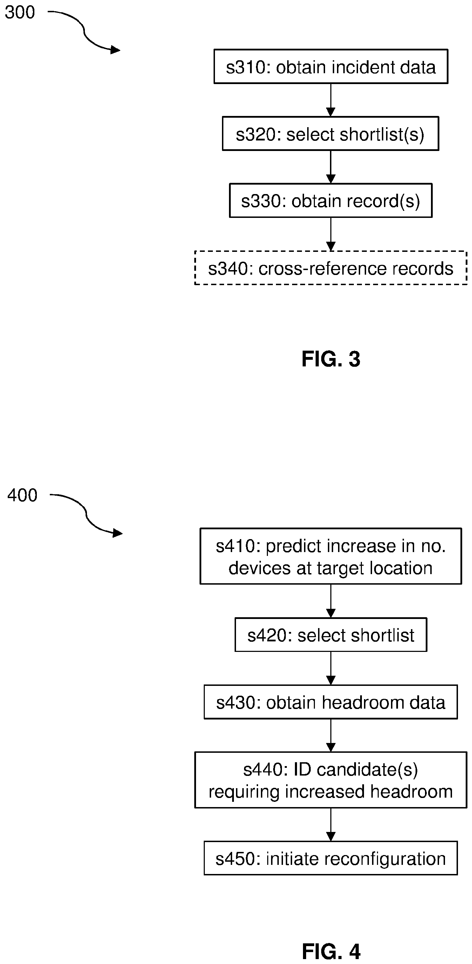

Figures 3 to 5 are flowcharts illustrating methods within which the method 100 of Figure 1 can be implemented.

Figure 3 outlines a computer-implemented method 300 which can be used to obtain data relevant to investigation of one or more incidents, for example by a law enforcement agency.

At step s310 a set of incident data is obtained for each of those one or more incidents. The incidents can for example be crimes, and/or suspected crimes, and/or accidents, and/or faults. The incident data can be obtained by receiving it (or precursor data from which the data processing system performing the method 300 can derive it) from another data processing system, whether unprompted or in response to a request, and/or by receiving it from a user input device. The incident data can for example originate from a data processing system of a law enforcement agency, and/or a vehicular traffic monitoring agency, and/or an insurance provider, and/or an infrastructure operator. The incident data can originate from the same data processing system performing the method 300, or a different one. Each set of incident data comprises a respective incident location and a respective incident time window.

At step s320 a method such as the method 100 of Figure 1 is performed to select a respective shortlist of candidate wireless network access nodes in respect of each of one or more target locations respectively corresponding to the one or more incident locations.

At step s330 one or more records are obtained for each incident, relating to serving of client communication devices by each candidate wireless network access node of the corresponding shortlist during that incident's time window. The records can for example comprise client communication device and/or user identifiers. The records can alternatively or additionally comprise call and/or connection logs. Data in the records can for example originate from data processing systems associated with the candidate wireless network access nodes of each of the plurality of shortlists. The records can for example be obtained by receiving them (or precursor data from which the data processing system performing the method 300 can derive them) from another data processing system, e.g. in response to a request.

If there are a plurality of sets of incident data, the method 300 can optionally further comprise cross-referencing records obtained for the plurality of incident time windows with one another at step s340, to identify any wireless communication devices present at more than one of the plurality of incidents. Such cross-referencing could for example be used to identify a suspect in a criminal investigation into a string of similar incidents such as burglaries.

Figure 4 outlines a computer-implemented method 400 which can be used to initiate network reconfiguration for capacity planning purposes.

At step s410 an increase in the number of wireless communication devices at a target location is predicted. This prediction can for example be based on plans for one or more of: building developments (e.g. housing, and/or workplaces, and/or public service provision sites, and/or retail centres, and/or entertainment venues, and/or transport hubs) , and events (e.g. festivals, and/or concerts, and/or sporting events).

A shortlist of candidate wireless network access nodes for serving the target location is selected at step s420, for example by performing the method 100 of Figure 1.

Next, at step s430 headroom data is obtained indicating capacity of each of the candidate wireless access nodes on the shortlist to handle a predicted increase in a number of client wireless communication devices at the target location. This headroom data can for example comprise maximum throughput (i.e. number of concurrent connections it is capable of handling), and/or total data rate it can provide. The headroom data can be obtained by receiving it (or precursor data from which the data processing system performing the method 400 can derive it) from another data processing system, whether unprompted or in response to a request, and/or by receiving it from a user input device.

At step s440, one or more of the candidate wireless access nodes on the shortlist that require increased headroom to accommodate the predicted increase are identified in dependence on the headroom data.

Reconfiguration of a network comprising the candidate wireless network access nodes on the shortlist is then initiated at step s450 to increase headroom of those one or more identified candidate wireless access nodes. The reconfiguration can for example comprise upgrading the identified candidate wireless network access nodes, for example by means of a software, and/or firmware, and/or hardware upgrade. The reconfiguration can alternatively or additionally comprise adding one or more new wireless access nodes to the network in the vicinity of the identified candidate wireless network access nodes, for example within a predetermined radius of each of the identified candidate wireless network access nodes. Initiating the reconfiguration can for example comprise controlling an automated system and/or recommending the reconfiguration to a human via a user interface device, whether in response to a request received via a user interface device or as an unprompted alert.

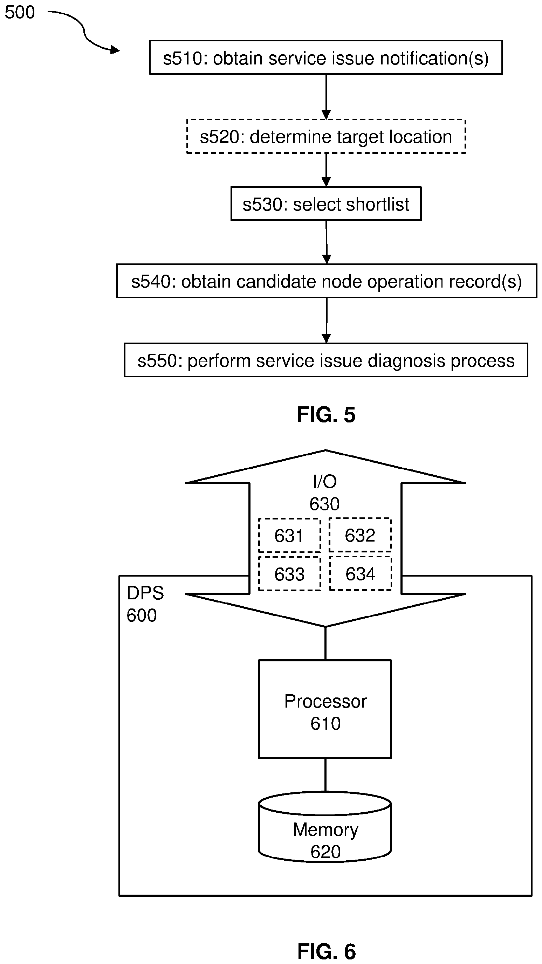

Figure 5 outlines a computer-implemented method 500 which can be used to diagnose communication service issues.

One or more service issue notifications in respect of a target location are obtained at step s510. The service issue notifications could for example originate from automated monitoring systems and/or customer complaints and/or field engineering reports. In the case of a single service issue notification, or multiple service issue notifications originating from a single source, the target location may be specified in or derivable from the service issue notification(s). For example, the service issue notification(s) may specify its/their origin point, which can be taken to be the target location. In some cases however, the service issue notifications may be in respect of a plurality of different locations. Therefore, the target location can optionally be determined at step s520 based on location data associated with the service issue notifications. For example, the target location can be determined as the arithmetic mean of a location associated with each of the service issue notifications. The mean can e.g. be a weighted mean, with weightings of each location being determined according to data comprised in the service issue notification from which it was obtained. Such data could for example comprise fault type and/or severity.

At step s530 a shortlist of candidate wireless network access nodes for the target location is selected, for example according to the method 100 of Figure 1.

Following selection of the shortlist, at step s540, one or more records relating to operation of each candidate wireless network access node on the shortlist are obtained. The records can for example be obtained by receiving them (or precursor data from which the data processing system performing the method 500 can derive them) from another data processing system, e.g. in response to a request. These records can for example originate from the candidate wireless network access nodes themselves, or a server system of their operator.

A service issue diagnosis process is then performed at step s550 in dependence on the records obtained at step s540.

## Suitable data processing system

Figure 6 schematically illustrates an example data processing system (DPS) 600 capable of performing any of the methods described above. It comprises a processor 610 operably coupled to both a memory 620 and an interface (I/O) 630.

The memory 620 can optionally comprise computer program instructions which, when the program is executed by the processor 610, cause the data processing system 600 to carry out any of the methods described above. Alternatively or additionally, the interface 630 can optionally comprise one or both of a physical interface 631 configured to receive a data carrier having such instructions stored thereon and a receiver 632 configured to receive a data carrier signal carrying such instructions.

The receiver 632, when present, can be configured to receive messages. It can comprise one or more wireless receiver modules and/or one or more wired receiver modules. The interface 630 can optionally comprise a transmitter 633 configured to transmit messages. The transmitter 633, when present, can comprise one or more wireless transmitter modules and/or one or more wired transmitter modules.

The interface 630 can optionally comprise one or more user interface devices 634.

## INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

**Claims**

1. A computer-implemented method comprising selecting a shortlist of candidate wireless network access nodes most likely to serve a target wireless communication device at a target location from a longlist of candidate wireless network access nodes, by iteratively:

   (i) moving a closest candidate wireless network access node, which is the candidate wireless network access node of the longlist closest to the target location, from the longlist to the shortlist; and
   (ii) deleting from the longlist any other candidate wireless network access nodes located within a shadow sector which encompasses that closest candidate wireless network access node, the shadow sector being a sector of a circle centred on the target location and encompassing all of the candidate wireless network access nodes on the longlist.

2. The computer-implemented method of claim 1,

   wherein for each iteration the shadow sector substantially extends from the target location in a direction of the respective closest candidate wireless network access node;
   the method further comprising determining an angular size of the shadow sector for each iteration such that said angular size increases with the respective closest candidate wireless network access node's distance from the target location.

3. The computer-implemented method of claim 2, wherein the angular size is determined in dependence on a predetermined maximum distance between the target wireless communication device and its serving wireless network access node, such that the angular size is 360° when the closest candidate wireless network access node's distance from the target location is equal to that predetermined maximum distance.

4. The computer-implemented method of any of claims 1 to 3, further comprising generating the longlist of candidate wireless network access nodes by obtaining a list of wireless network access nodes within a geofence in which the target location is located.

5. The computer-implemented method of claim 4, wherein the longlist is generated by applying one or more filters to the list of wireless network access nodes within the geofence, said one or more filters being selected from filters on:

   a communication technology the wireless network access node operates with;
   an operator of the wireless network access node;
   a maximum angle between a bearing from the wireless network access node to the target location, and a direction in which a nearest antenna lobe of the wireless network access node substantially extends; and
   a time window the wireless network access node was/will be operational during.

6. The computer-implemented method of any of claims 1 to 5, further comprising:
   obtaining a set of incident data for each of one or more incidents, each set of incident data comprising a respective incident location and a respective incident time window;

   wherein the selection of the shortlist of candidate wireless network access nodes is performed in respect of one or more target locations respectively corresponding to the one or more incident locations to produce a corresponding one or more shortlists;
   the method further comprising:
   for each incident, obtaining one or more records relating to serving of client communication devices by each candidate wireless network access node of the corresponding shortlist during that incident's time window.

7. The computer-implemented method of claim 6, wherein there are a plurality of sets of incident data, the method further comprising:
   cross-referencing records obtained for the plurality of incident time windows with one another to identify any wireless communication devices present at more than one of the plurality of incidents.

8. The computer-implemented method of any of claims 1 to 5, further comprising, following selection of the shortlist:

   obtaining headroom data indicating capacity of each of the candidate wireless access nodes on the shortlist to handle a predicted increase in a number of client wireless communication devices at the target location;

identifying, in dependence on said headroom data, one or more of the candidate wireless access nodes on the shortlist that require increased headroom to accommodate that predicted increase; and

initiating reconfiguration of a network comprising the candidate wireless network access nodes on the shortlist to increase headroom of those one or more identified candidate wireless access nodes.

9. The computer-implemented method of any of claims 1 to 5, further comprising, following selection of the shortlist:

obtaining one or more records relating to operation of each candidate wireless network access node on the shortlist; and

performing a service issue diagnosis process in dependence thereon.

10. The computer-implemented method of claim 9, further comprising:

obtaining one or more service issue notifications in respect of the target location and performing the method of claim 9 in response thereto; and optionally

determining the target location based on location data associated with the service issue notifications.

11. The computer-implemented method of any preceding claim, wherein iteration of steps (i) and (ii) is terminated on satisfaction of one or more termination criteria selected from:

the longlist being empty;

the shortlist consisting of a predetermined maximum number of candidate wireless network access nodes;

a predetermined maximum number of iterations having been completed; and

a predetermined maximum iteration duration having expired.

12. A data processing system configured to perform the method of any preceding claim.

13. A computer program comprising instructions which, when the program is executed by a computer, cause the computer to carry out the method of any of claims 1 to 11.

14. A computer-readable data carrier having stored thereon the computer program of claim 13.

15. A data carrier signal carrying the computer program of claim 13.

100

s120: obtain longlist

s121: obtain
nodes in geofence

s110: obtain
target location

s122: filter

s130: obtain
relative locations

s140: select closest candidate

s155:
obtain *D*

s160: determine *A*

s150: move closest
candidate to shortlist

s170: delete any other candidates
within that candidate's shadow
sector from longlist

N

q180: any termination
criteria met?

Y

s190: output shortlist

**FIG. 1**

**FIG. 2A**

**FIG. 2B**

**FIG. 2C**

**FIG. 2D**

300

s310: obtain incident data

↓

s320: select shortlist(s)

↓

s330: obtain record(s)

↓

s340: cross-reference records

**FIG. 3**

400

s410: predict increase in no. devices at target location

↓

s420: select shortlist

↓

s430: obtain headroom data

↓

s440: ID candidate(s) requiring increased headroom

↓

s450: initiate reconfiguration

**FIG. 4**

500

s510: obtain service issue notification(s)

s520: determine target location

s530: select shortlist

s540: obtain candidate node operation record(s)

s550: perform service issue diagnosis process

**FIG. 5**

I/O
630

631

632

633

634

DPS
600

Processor
610

Memory
620

**FIG. 6**

Europäisches
Patentamt
European
Patent Office
Office européen
des brevets

# EUROPEAN SEARCH REPORT

**Application Number**

EP 24 17 2241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/010644 A1 (CHEN LIANG [CA] ET AL) 10 January 2013 (2013-01-10) * paragraph [0035] - paragraph [0083] * ----- | 1-15 | INV. H04W4/02 H04W16/18 H04W36/00 H04W36/32 |

**TECHNICAL FIELDS SEARCHED (IPC)**

H04W

The present search report has been drawn up for all claims

| Place of search | Date of completion of the search | Examiner |
|---|---|---|
| The Hague | 24 June 2024 | Mavridis, Theodoros |

EPO FORM 1503 03.82 (P04C01)

## ANNEX TO THE EUROPEAN SEARCH REPORT
## ON EUROPEAN PATENT APPLICATION NO.

EP 24 17 2241

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | Publication date | Patent family member(s) | Publication date |
|---|---|---|---|
| US 2013010644 A1 | 10-01-2013 | BR PI0815101 A2 | 27-01-2015 |
| | | CN 101810022 A | 18-08-2010 |
| | | EP 2189023 A2 | 26-05-2010 |
| | | JP 5629209 B2 | 19-11-2014 |
| | | JP 2010536270 A | 25-11-2010 |
| | | KR 20100068378 A | 23-06-2010 |
| | | US 2009052350 A1 | 26-02-2009 |
| | | US 2013010644 A1 | 10-01-2013 |
| | | WO 2009021213 A2 | 12-02-2009 |

EPO FORM P0459

For more details about this annex : see Official Journal of the European Patent Office, No. 12/82